# EUROPÄISCHE PATENTSCHRIFT

(11) **EP 2 019 291 B1**
(45) Veröffentlichungstag und Bekanntmachung des Hinweises auf die Patenterteilung: **15.08.2012**
(21) Anmeldenummer: 08007801.7
(22) Anmeldetag: 23.04.2008
(51) Int. Cl.: G01D 5/347

(54) **Körper mit einer Winkelskalierung und dessen Verwendung**
Body with angle scaling and its use
Corps doté d'une mise à l'échelle d'angle et son utilisation

(30) Priorität: 23.07.2007 DE 102007034640
(43) Veröffentlichungstag der Anmeldung: 28.01.2009
(73) Patentinhaber: Dr. Johannes Heidenhain GmbH, 83301 Traunreut (DE)
(72) Erfinder: Mitterreiter, Johann, 83339 Chieming (DE); Dormann, Jens, 83308 Trostberg (DE); Haible, Pascal, 83308 Trostberg (DE)

(56) Entgegenhaltungen:
- EP-A- 1 666 848
- US-A- 4 257 040

## Beschreibung

Die Erfindung betrifft einen Körper mit einer Winkelskalierung gemäß dem Anspruch 1, wie er insbesondere in Winkelmesssystemen einsetzbar ist. Zudem betrifft die Erfindung eine Verwendung des Körpers mit einer Winkelskalierung zur Messung der Drehstellung an einer schnell laufenden Welle einer Werkzeugmaschine gemäß dem Anspruch 10.

Derartige Winkelmesssysteme dienen zur Messung von Drehbewegungen bzw. Drehstellungen eines Maschinenteils, etwa einer Welle, an der dann ein Körper mit einer Winkelskalierung drehfest fixiert ist. Die Winkelskalierung kann beispielsweise eine optische oder eine magnetische Teilung aufweisen, die entsprechend abgetastet werden kann. Dabei wird die Drehbewegung entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in Werkzeugmaschinen an schnell laufenden Spindeln verwendet. Derartige Spindeln werden immer mehr mit hohen Drehzahlen beispielsweise bis zu über 40000 Umdrehungen pro Minute betrieben, um hochwertige Werkstückoberflächen z.B. durch spanabhebende Werkzeugmaschinen zu erreichen. Entsprechend groß ist die mechanische Belastung von rotierenden Teilen, die an einer derartigen Spindel montiert sind. Insbesondere sind die in der Regel ringförmigen Körper mit einer Winkelskalierung, insbesondere mit einer magnetischen Teilung, drehfest mit den Spindeln verbunden, so dass diese enormen Zentrifugalkräften ausgesetzt sind. Es ist ein permanentes Ziel Körper mit einer Winkelskalierung zu konstruieren, welche den Belastungen auf Grund hoher Drehzahlen standhalten, und welche insbesondere unter diesen Belastungen die erforderliche Dauerfestigkeit aufweisen. Diese Anforderungen resultieren nicht zuletzt aus sicherheitstechnischen Überlegungen.

Die Erfindung geht von einem Stand der Technik aus, wie er beispielsweise in der Patentschrift US 4257040 offenbart ist. Dort ist ein Körper mit einer Winkelskalierung gezeigt, der formschlüssig als rotierendes Element an einer Welle befestigbar ist.

Eine derartige Ausgestaltung des rotierenden Körpers mit einer Winkelskalierung hat aber den Nachteil, dass dessen zulässige maximale Drehzahl bei hohen Drehzahlen, wie sie bei schnell laufenden Maschinenteilen, insbesondere Wellen auftreten, nicht ausreichend groß ist bzw. dessen Dauerfestigkeit nicht gegeben ist.

Der Erfindung liegt daher die Aufgabe zu Grunde, einen Körper mit einer Winkelskalierung zur Messung der Drehstellung eines Maschinenteils zu schaffen, welcher sich insbesondere dadurch auszeichnet, dass dieser für extrem hohe maximale Drehzahlen geeignet ist.

Der Erfindung liegt zudem die Aufgabe zu Grunde, die Drehstellung einer schnell laufenden Welle einer Werkzeugmaschine zu messen.

Diese Aufgaben werden durch einen Körper mit einer Winkelskalierung gemäß dem Anspruch 1 gelöst, sowie durch die Verwendung des Körpers gemäß dem Anspruch 10.

Demnach ist der erfindungsgemäße ringförmige Körper mit einer Winkelskalierung zur Messung der Drehstellung eines Maschinenteils um eine Achse geeignet. Der Körper weist dabei an seinem Innenumfang radiale Ausnehmungen und Erhebungen auf. Zumindest eine der Ausnehmungen ist zur formschlüssigen drehfesten Befestigung an dem Maschinenteil geeignet. Weiterhin ist die Summe der Zentriwinkel, welche jeweils durch Start- und Endpunkte der Erhebungen definiert sind kleiner ist als die Summe der Zentriwinkel, welche jeweils durch Start- und Endpunkte der Ausnehmungen definiert sind.

Unter Zentriwinkel ist im Folgenden insbesondere ein Mittelpunktswinkel um einen Punkt auf der Achse innerhalb des ringförmigen Körpers zu verstehen.

Es zeigte sich, dass sich mit den erfindungsgemäßen Körpern mit einer Winkelskalierung wesentlich höhere zulässige Drehzahlen erreichen lassen und dass die ringförmigen Körper die erforderlichen Dauerfestigkeiten bei entsprechend hohen Drehzahlen aufweisen.

Insbesondere ist es vorteilhaft, wenn der ringförmige Körper mit einer Winkelskalierung so ausgestaltet ist, dass die Summe der Zentriwinkel, welche jeweils durch Start- und Endpunkte der Ausnehmungen definiert sind größer als 220°, insbesondere größer als 240°, mit Vorteil größer als 270° oder 300° ist.

In weiterer Ausgestaltung der Erfindung kann die zumindest eine Ausnehmung zur formschlüssigen drehfesten Befestigung an dem Maschinenteil eine Geometrie mit einem kleinsten Konturradius Ry aufweisen. Eine weitere Ausnehmung weist einen kleinsten Konturradius Rx auf, so dass die Bedingung Ry < Rx erfüllt ist. Die weitere Ausnehmung dient dann häufig nicht zur Übertragung eines Drehmoments vom Maschinenteil auf den Körper, sondern ist konstruktiv nur zur Erhöhung der zulässigen Drehzahl bzw. zur Erhöhung der Dauerfestigkeit vorgesehen.

Sofern die betreffende Ausnehmung zur formschlüssigen drehfesten Befestigung an dem Maschinenteil mehrere Konturradien aufweist, ist hier insbesondere der kleinste Konturradius Ry relevant. Es kann aber auch sein, dass die Ausnehmung zur formschlüssigen drehfesten Befestigung an dem Maschinenteil nur einen Konturradius Ry aufweist, beispielsweise wenn die betreffende Ausnehmung halbrundförmig gestaltet ist, zur Aufnahme eines im Querschnitt runden Stifts. In diesem Fall ist dann auch der (einzige) Konturradius Ry maßgeblich.

Mit Vorteil kann der ringförmige Körper mit einer Winkelskalierung so konstruiert sein, dass der kleinste Abstand zwischen dem Grund der Ausnehmung zur formschlüssigen drehfesten Befestigung an dem Maschinenteil des Körpers und der Achse kleiner oder gleich dem kleinsten Abstand zwischen dem Grund einer der weiteren Ausnehmung und der Achse ist. Unter kleinstem Abstand ist die kürzeste Entfernung zur Achse zu verstehen, so dass also die Strecke von der Achse zu demjenigen Punkt, dessen Abstand bestimmt wird, orthogonal zur Achse ausgerichtet ist. Der Grund der weiteren Ausnehmung ist derjenige geometrische Bereich, der von der Achse innerhalb der Ausnehmung am weitesten beabstandet ist.

In weiterer Ausgestaltung der Geometrie des ringförmiger Körpers ist das Verhältnis des Außenradius des Körpers zu dessen Innenradius kleiner als 2, insbesondere kleiner als 2,25 oder 1,75. Denn gerade bei derart schlanken ringförmigen Körpern ist grundsätzlich die Materialbeanspruchung besonders hoch.

Mit Vorteil ist der ringförmige Körper so ausgestaltet, dass dessen Winkelskalierung an der Mantelseite des Körpers angeordnet ist. Alternativ dazu umfasst aber die Erfindung auch Körper an deren Stirnseite eine Winkelskalierung angeordnet ist, etwa mit radial ausgerichteten Skalen- bzw. Teilungsstrukturen.

Mit Vorteil ist der Körper monolithisch ausgeführt. Unter dem Begriff monolithisch ist im Folgenden zu verstehen, dass ein so bezeichneter Körper aus einem Stück besteht, so dass dieser etwa durch einen spanabhebenden Prozess beispielsweise aus einem Stahlwerkstoff gefertigt werden kann. Durch die monolithische Bauweise kann die zulässige maximale Drehzahl positiv beeinflusst werden.

Die Winkelskalierung kann als separater Ring am ringförmigen Körper befestigt sein, oder direkt auf oder am Körper aufgebracht sein. Beispielsweise kann die Winkelskalierung aus magnetischen Bereichen bestehen, die direkt durch entsprechende Magnetisierung des Körpers erzeugt wurden.

Ein direktes Aufbringen einer Winkelskalierung auf den ringförmigen Körper kann auch beispielsweise mit einem Laser-Abladier-Prozess vorgenommen werden. Zu diesem Zweck wird die äußere Mantelseite des Körpers mit einer speziellen Lage beschichtet und dann eine Einzelstrichablation vorgenommen. Demgemäß kann die Winkelskalierung dann mit einem optischen Prinzip abgetastet werden. Auch kann durch ein Lithographieverfahren oder ein Prägeverfahren eine Winkelskalierung direkt auf dem Körper aufgebracht werden.

Mit Vorteil wird die Winkelskalierung alternativ als separater Ring am ringförmigen Körper befestigt, insbesondere wenn für diesen Ring ein spezieller magnetischer Werkstoff verwendet wird, bei dem eine magnetische Teilungsstruktur mit großen Feldstärken erzeugt wird.

In weiterer Ausgestaltung kann die Ausnehmung zur formschlüssigen drehfesten Befestigung des Körpers an dem Maschinenteil als eine Passfedernut, etwa für eine Scheibenfeder, Einlege-Passfeder oder Gleitfeder ausgestaltet sein. Alternativ kann die formschlüssige drehfeste Befestigung des Körpers an dem Maschinenteil mit einem Vielnutprofil oder einer Stiftverbindung herstellbar sein.

Gemäß einem weiteren Aspekt der Erfindung wird die Verwendung eines entsprechend ausgestalteten ringförmigen Körpers mit einer Winkelskalierung an einer schnell laufenden Welle einer Werkzeugmaschine zur Messung der Drehstellung der Welle vorgeschlagen. Unter einer schnell laufenden Welle sind Wellen zu verstehen, die sich mit mindestens 10000, insbesondere mindestens 20000, oder mindestens 30000 Umdrehungen pro Minute im Betrieb drehen können. Insbesondere ist es in diesem Zusammenhang vorteilhaft, wenn die Werkzeugmaschine eine spanabhebende Maschine ist, weil derartige Werkzeugmaschinen häufig extrem hohe maximale Drehzahlen der Spindel vorweisen. Entsprechend ist mit Vorteil die Welle, an welcher der ringförmige Körper befestigt ist, an ein spanabhebendes Werkzeug koppelbar.

Vorteilhafte Ausführungsformen des erfindungsgemäßen Körpers mit einer Winkelskalierung sind aus den Merkmalen in den von den Ansprüchen 1 und 10 abhängigen Ansprüchen zu entnehmen.

Weitere Vorteile, sowie Einzelheiten des erfindungsgemäßen Körpers mit einer Winkelskalierung ergeben sich aus der nachfolgenden Beschreibung von Ausführungsbeispielen anhand der beiliegenden Figuren.

Es zeigen die
- Figur 1: eine perspektivische Ansicht eines erfindungsgemäßen Körpers mit einer Winkelskalierung,
- Figur 2a: einen Querschnitt in radialer Richtung durch den Körper mit der Winkelskalierung, gemäß einem ersten Ausführungsbeispiel,
- Figur 2b: eine Draufsicht auf den Körper mit der Winkelskalierung, gemäß dem ersten Ausführungsbeispiel,
- Figur 3: eine Draufsicht auf den Körper mit der Winkelskalierung, gemäß dem ersten Ausführungsbeispiel, mit Angaben zu den entsprechenden Zentriwinkeln,
- Figur 4: eine Draufsicht auf den Körper mit der Winkelskalierung, gemäß dem ersten Ausführungsbeispiel, im angebauten Zustand,
- Figur 5: eine Draufsicht auf den Körper mit der Winkelskalierung, gemäß einem zweiten Ausführungsbeispiel, im angebauten Zustand.

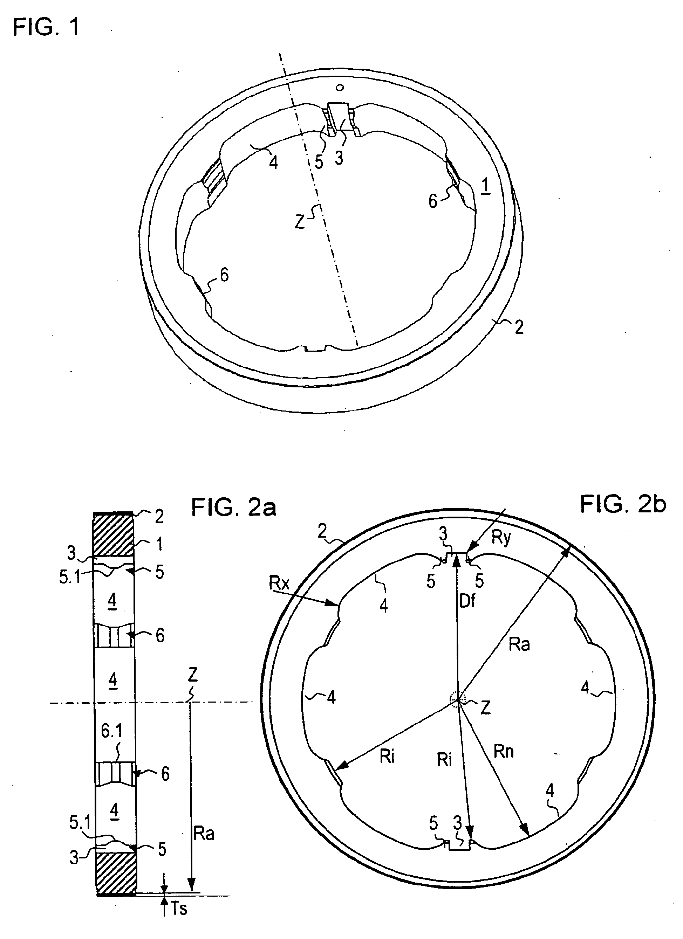

Gemäß den Figuren 1 bis 5 umfasst der der entsprechende Körper 1, 1' in den Ausführungsbeispielen an seinem Innenumfang zwei Ausnehmungen zur formschlüssigen drehfesten Befestigung an einem Maschinenteil, hier an einer Welle 8. Insbesondere sind hier diese Ausnehmungen als Passfedernuten 3 nach DIN 6885 ausgestaltet, in die eine Passfeder 7 eingebaut werden kann: Der ringförmige Körper 1, 1' bzw. die Welle 8 sind um eine zentrale Achse Z drehbar. Zur Messung der Drehstellung einer Welle 8 um eine Achse Z, ist der ringförmige Körper 1 mit einer mantelseitigen Winkelskalierung 2 versehen. In den vorliegenden Beispielen weist die Winkelskalierung 2 eine magnetische Teilung auf, insbesondere wird hier ein separater ferromagnetischer Ring mit über den Umfang hinweg abwechselnd magnetisierten Bereichen verwendet. Der ferromagnetische Ring besteht beispielsweise aus einer Legierung mit den Komponenten Eisen, Chrom, Kobalt und Molybdän, während der Körper 1 aus einem hochfesten Lagerstahl hergestellt ist. Dabei ist der ferromagnetische Ring mit dem Körper 1, 1' mantelseitig durch eine Lötverbindung befestigt.

Der Körper 1, 1' selbst hat einen Außendurchmesser von etwa 73,8 mm (Ra = 36,9 mm), wobei zusätzlich der ferromagnetische Ring eine Stärke Ts von 0,8 mm aufweist.

Die Winkelskalierung 2 ist so ausgestaltet, dass eine Drehstellung um eine Achse Z des Körpers 1, 1' detektierbar ist, das heißt, dass die magnetischen Markierungen der Winkelskalierung 2 bei Drehung des Ringkörpers um die Achse Z einen Versatz in Umfangs- bzw. Drehrichtung aufweisen. Im gezeigten Ausführungsbeispiel ist die Winkelskalierung 2 derart ausgestaltet, dass eine magnetische Abtastung der Winkelskalierung 2 durch einen magnetosensitiven Abtastkopf möglich ist.

Gemäß dem ersten Ausführungsbeispiel (Figuren 1 bis 4) weist der Körper 1 an seinem Innenumfang neben den Passfedernuten 3 weitere Ausnehmungen 4 auf. Diese dienen nicht zur Befestigung an der Welle 8, sondern sind nur aus Gründen der Erhöhung der zulässigen Drehzahl bzw. der Dauerbelastbarkeit des Körpers 1 vorgesehen. Somit weist der Körper 1 zwischen den Passfedernuten 3 und den Ausnehmungen 4 Erhebungen 5 auf, die bezogen auf die axiale Ausdehnung des Körpers 1 in der Mitte einen Zentrierbund 5.1 umfassen. Dieser Zentrierbund 5.1 ist überaus genau bearbeitet und dient als Kontaktfläche zur Welle 8. Des Weiteren sind am Innenumfang Erhebungen 6 zwischen den einzelnen Ausnehmungen 4 vorgesehen. Auch diese Erhebungen 6 haben ebenfalls axial mittig jeweils einen genau bearbeiteten Zentrierbund 6.1. Entsprechend liegt die Welle 8 im eingebauten Zustand an den Zentrierbünden 5.1, 6.1 entlang einer unterbrochenen Umgangslinie an.

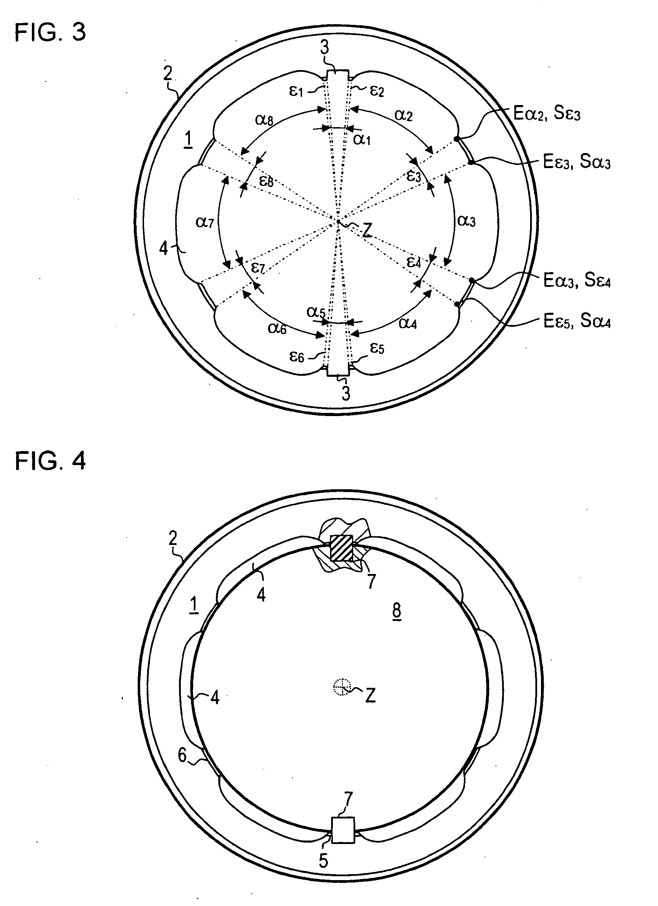

Gemäß der Figur 3 kann die relative Aufteilung der Erhebungen 5, 6 im Verhältnis zu den Passfedernuten 3 und den Ausnehmungen 4 erläutert werden. Für diese Betrachtung können Zentriwinkel α, ε herangezogen werden, die im vorliegenden Fall den Winkel zwischen zwei von der Achse Z radial nach außen gerichteten Geraden beschrieben, welche durch definierte Startpunkte Sα₁ bis Sα₈, Sε₁ bis Sε₈ bzw. Endpunkte Eα₁ bis Eα₈, Eε₁ bis Eε₈ am Innenumfang des Körpers 1 verlaufen. Der Übersichtlichkeit halber wurde auf die Bezeichnung aller Start- und Endpunkte Sα₁ bis Sα₈, Sε₁ bis Sε₈, Eα₁ bis Eα₈, Eε₁ bis Eε₈ in der Figur 3 verzichtet, so dass in der Figur 3 nur die Startpunkte Sε₃, Sα₃, Sε₄ und Sα₄ und die Endpunkte Eα₂, Eε₃, Eα₃ und Eε₅ dargestellt sind. In den vorgestellten Ausführungsbeispielen kommen stets Startpunkte Sα₁ bis Sα₈, Sε₁ bis Sε₈, auf Endpunkten Eα₁ bis Eα₈, Eε₁ bis Eε₈ zu liegen. Beispielsweise liegt der Endpunkt Eα₂ auf dem Startpunkt Sε₃.

Im vorliegenden Ausführungsbeispiel sind zwei Gruppen von Zentriwinkeln α, ε definiert. Die erste Gruppe umfasst die Zentriwinkel αᵢ, welche jeweils durch Startpunkte Sαᵢ und Endpunkte Eαᵢ, an den Passfedernuten 3 bzw. den Ausnehmungen 4 definiert sind. Die zweite Gruppe umfasst dann Zentriwinkel εᵢ, welche jeweils durch Start- und Endpunkte Sεᵢ, Eεᵢ der Erhebungen 5, 6 definiert sind. Insbesondere sind hier die Startpunkte Sαᵢ, Sεᵢ, und Endpunkte Eαᵢ, Eεᵢ gleichzeitig diejenigen Punkte, an denen ein Übergang bezüglich des Anliegens und Nicht-Anliegens der Welle 8 am Körper 1 vorliegt. Die Passfedernuten 3 bzw. die Ausnehmungen 4 liegen also zwischen den Startpunkten Sαᵢ und den Endpunkten Eαᵢ, während die Erhebungen 5, 6 zwischen den Startpunkten Sεᵢ und den Endpunkten Eεᵢ liegen. Wie bereits beschrieben, liegt hier auf jedem Startpunkt Sα₁ bis Sα₈, Sε₁ bis Sε₈, auch ein Endpunkt Eα₁ bis Eα₈, Eε₁ bis Eε₈. So ist beispielsweise der Punkt Eα₂ deckungsgleich mit Sε₃, wie in der Figur 3 gezeigt.

Die Größen der Zentriwinkel εᵢ der zweiten Gruppe leiten sich also aus der jeweiligen Länge des Bogens entlang welchem die Welle 8 an einer der Erhebungen 5, 6 anliegt und dem Innenradius Ri ab. So ist beispielsweise der Zentriwinkel ε₁, durch die umfangsbezogene Länge des Zentrierbundes 5.1 und den Innenradius Ri festgelegt, wobei im vorliegenden Ausführungsbeispiel ε₁ = 2° beträgt. Aus Gründen der Symmetrie weisen die Zentriwinkel ε₂, ε₅, ε₆, ebenfalls den Wert 2° auf.

Das gleiche gilt bezüglich der breiteren Erhebungen 6.1, wobei hier mit jeweils 12° größere Zentriwinkel ε₃, ε₄, ε₇, ε₈ gegeben sind, weil bei gleichem Innenradius Ri längere Zentrierbunde 5.1 vorliegen.

Somit beträgt also die Summe der Zentriwinkel εᵢ, welche jeweils durch Start- und Endpunkte Sεᵢ, Eεᵢ der Erhebungen 5, 6 definiert sind bei 56°. Daraus lässt sich bereits die Summe der Zentriwinkel αᵢ, welche jeweils durch Start- und Endpunkte Sαᵢ, Eαᵢ an den Passfedernuten 3 bzw. den Ausnehmungen 4 definiert sind, bestimmen. Denn im Ausführungsbeispiel sind die Passfedernuten 3 bzw. die Ausnehmungen 4 diejenigen Bereiche entlang einer inneren Umfangslinie des Körpers 1, die nicht für eine Berührung mit der Welle 8 vorgesehen sind. Die Summe der Zentriwinkel αᵢ beträgt folglich 360° - 56° = 304°.

Im Einzelnen betragen die Zentriwinkel α₁, und α₅ jeweils: 8° und die Zentriwinkel α₂, α₃, α₄, α₆, α₇ und α₈ jeweils 48°.

Im Ergebnis ergibt sich also Σεᵢ = 56° < Σαᵢ = 304°.

Damit eine ausreichend hohe zulässige Drehzahl für den Körper 1 erreichbar ist, ist die Geometrie des Körpers 1 entsprechend dimensioniert worden. Insbesondere die Gestaltung der einzelnen Radien Ra, Rn, Ri, Ry und Rx ist in diesem Zusammenhang zur Optimierung der zulässigen Drehzahl von Bedeutung.

Besonders vorteilhaft ist die Erfindung bei vergleichsweise schlanken ringförmigen Körpern 1. Beispielsweise beträgt im vorliegenden Ausführungsbeispiel das Verhältnis von Ra zu Ri etwa 1,34. Überraschenderweise kann also die zulässige maximale Drehzahl erhöht werden, wenn die Ausnehmungen 4 am Körper 1 erzeugt werden. Obwohl die radiale Ausdehnung des ringförmigen Körpers im Vergleich zu Ausführungen gemäß dem Stand der Technik reduziert wird.

Im vorgestellten Ausführungsbeispiel ist zudem der Abstand Df zwischen dem Grund der Passfedernuten 3 und der Achse Z mit 29,3 mm kleiner als der Radius Rn zwischen dem Grund der weiteren Ausnehmungen 4 und der Achse Z, da Rn hier 30,1 mm beträgt. Demnach dringen also die Passfedernuten 3 nicht in den Ringbereich des Körpers 1 ein, der durch den Radius Rn nach innen begrenzt ist. Entsprechend verlaufen die mechanischen Spannungen im Betrieb des Körpers 1 in einem geometrischen Ringbereich, der durch den Radius Rn nach innen begrenzt ist, sehr gleichmäßig, so dass die maximalen Amplituden von Spannungsspitzen minimiert sind.

Die Passfedernuten 3 werden in Umfangsrichtung durch parallele Stege und in radialer Richtung durch den Grund der Passfedernuten 3 begrenzt. Der Übergang zwischen dem Grund der Passfedernuten 3 zu den Stegen weist eine Rauheit R_{z} von 25µm auf und einen vergleichsweise kleinen Konturradius Ry, der im gezeigten Ausführungsbeispiel 0,175 mm beträgt. Deshalb sind dort vergleichsweise große Spannungsspitzen infolge von Kerbwirkungen zu erwarten. Damit dennoch eine hohe zulässige Drehzahl ermöglicht wird, sind die kleinsten Konturradien Rx, die zum Übergang auf den Radius Rn, der den Grund der Ausnehmung 4 festlegt, vergleichsweise groß bemessen, hier 5 mm. Somit ergibt sich hier ein Verhältnis Rx/Ry von ungefähr 28,6.

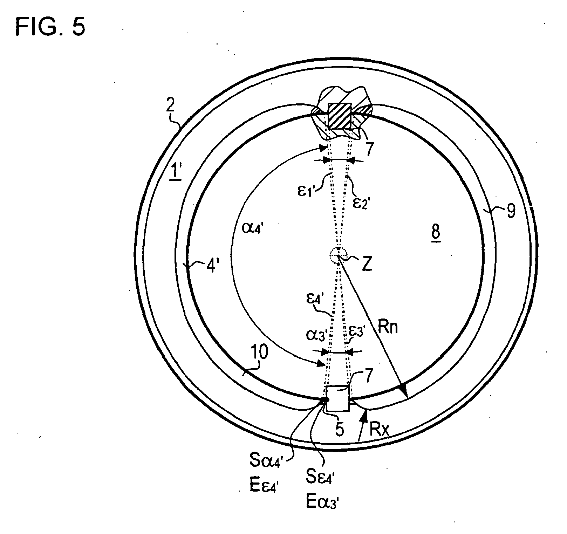

In der Figur 5 ist ein zweites Ausführungsbeispiel eines erfindungsgemäßen Körpers 1' gezeigt. Ein wesentlicher Unterschied zum Gegenstand des ersten Ausführungsbeispiels besteht darin, dass nunmehr nur zwei in Umfangsrichtung vergleichsweise lange Ausnehmungen 4' vorgesehen sind. Im vorgestellten Ausführungsbeispiel sind die beiden Ausnehmungen 4' jeweils mit einem Segment 9, welches z. B. aus Kunststoff hergestellt ist, ausgefüllt. Die Segmente 9 tragen zur Zentrierung der Welle 8 bei und können zusätzlich noch dämpfende Wirkung entfalten. Andererseits werden praktische keine Tangentialspannungen durch das Segment 9 in den tragenden Körper 1' übertragen, so dass auch hier ein weitgehend homogener Spannungsverlauf, insbesondere in denjenigen Ringbereich des Körpers 1', der durch den Radius Ri nach innen hin begrenzt wird.

Selbstredend gelten auch für das zweite Ausführungsbeispiel die Überlegungen bezüglich der Zentriwinkel, denn die Summe der Zentriwinkel εᵢ', welche jeweils durch Start- und Endpunkte Sε₁' bis Sε₄', Eε₁' bis Eε₄' der Erhebungen 5 definiert sind ist auch hier kleiner ist als die Summe der Zentriwinkel αᵢ', welche jeweils durch Start- und Endpunkte Sα₁' bis Sα₄', Eα₁' bis Eα₄' der Passfedernut 3 und den Ausnehmungen 4 definiert sind. Im gezeigten Ausführungsbeispiel ist ganz offensichtlich der Summenwert (ε₁' + ε₂' + ε₃' + ε₄') wesentlich kleiner als (α₁' + α₂' + α₃' + α₄'), so dass auch hier die Bedingung Σαᵢ' < Σαᵢ' erfüllt ist.

Gemäß einer alternativen Ausgestaltung können die Segmente 9 auch als Metallteile ausgestaltet sein. In diesem Fall wird ebenfalls vermieden, dass durch die Segmente 9 störende Tangentialspannungen in den Körper 1' eingeleitet werden, insbesondere durch eine Trennfuge zwischen den Segmenten 9 und dem Körper 1'.

In weiterer Ausgestaltung der Erfindung kann der Körper 1' auch nur eine Passfedernut 3 aufweisen, so dass ein Segment 9 die nunmehr nur eine Ausnehmung 4' ausfüllt.

## Patentansprüche

1. Ringförmiger Körper (1, 1') mit einer Winkelskalierung (2), zur Messung der Drehstellung eines Maschinenteils (8) um eine Achse (Z), wobei der Körper (1, 1') an seinem Innenumfang radiale Ausnehmungen (3, 4, 4') und Erhebungen (5, 6) aufweist und zumindest eine der Ausnehmungen (3) zur formschlüssigen drehfesten Befestigung an dem Maschinenteil (8) geeignet ist, **dadurch gekennzeichnet, dass**
die Summe der Zentriwinkel (εᵢ, εᵢ'), welche jeweils durch Start- und Endpunkte (Sεᵢ, Eεᵢ, Sεᵢ', Eεᵢ') der Erhebungen (5, 6) definiert sind kleiner ist als die Summe der Zentriwinkel (αᵢ, αᵢ'), welche jeweils durch Start- und Endpunkte (Sαᵢ, Eαᵢ, Sαᵢ', Eαᵢ') der Ausnehmungen (3, 4, 4') definiert sind, wobei die Start- und Endpunkte (Sεᵢ, Eεᵢ, Sεᵢ', Eεᵢ'; Sαᵢ, Eαᵢ, Sαᵢ', Eαᵢ') gleichzeitig diejenigen Punkte sind, an denen bestimmungsgemäß ein Übergang bezüglich des Anliegens und Nicht-Anliegens des Maschinenteils (8) am Körper (1,1') vorliegt.

2. Ringförmiger Körper (1, 1') mit einer Winkelskalierung (2), gemäß dem Anspruch 1, **dadurch gekennzeichnet, dass** die Summe der Zentriwinkel (αᵢ, αᵢ'), welche jeweils durch Start- und Endpunkte (Sαᵢ, Eαᵢ, Sαᵢ', Eαᵢ') der Ausnehmungen (3, 4, 4') definiert sind größer als 240°, insbesondere größer als 300° ist.

3. Ringförmiger Körper (1, 1') mit einer Winkelskalierung (2), gemäß dem Anspruch 1 oder 2, **dadurch gekennzeichnet, dass** die zumindest eine Ausnehmung (3) zur formschlüssigen drehfesten Befestigung an dem Maschinenteil (8) eine Geometrie aufweist mit einem kleinsten Konturradius Ry und eine weitere Ausnehmung (4, 4') einen kleinsten Konturradius Rx aufweist mit der Bedingung Ry < Rx.

4. Ringförmiger Körper (1, 1') mit einer Winkelskalierung (2) gemäß einem der vorhergehenden Ansprüche, **dadurch gekennzeichnet, dass** der kleinste Abstand (Df) zwischen dem Grund der Ausnehmung (3) zur formschlüssigen drehfesten Befestigung an dem Maschinenteil (8) des Körpers (1, 1') und der Achse (Z) kleiner oder gleich dem kleinsten Abstand (Rn) zwischen dem Grund einer weiteren Ausnehmung (4, 4') und der Achse (Z) ist.

5. Ringförmiger Körper (1, 1') mit einer Winkelskalierung (2) gemäß einem der vorhergehenden Ansprüche, **dadurch gekennzeichnet, dass** das Verhältnis des Außenradius (Ra) des Körpers (1, 1') zu dessen Innenradius (Ri) kleiner als 2,25 ist, insbesondere kleiner als 1,75.

6. Ringförmiger Körper (1, 1') mit einer Winkelskalierung (2) gemäß einem der vorhergehenden Ansprüche, **dadurch gekennzeichnet, dass** die Winkelskalierung (2) an der Mantelseite des Körpers (1, 1') angeordnet ist.

7. Ringförmiger Körper (1, 1') mit einer Winkelskalierung (2) gemäß einem der vorhergehenden Ansprüche, **dadurch gekennzeichnet, dass** die Winkelskalierung (2) als separater Ring am ringförmigen Körper (1, 1') befestigt ist.

8. Ringförmiger Körper (1, 1') mit einer Winkelskalierung (2) gemäß einem der vorhergehenden Ansprüche, **dadurch gekennzeichnet, dass** die Winkelskalierung (2) aus magnetischen Bereichen besteht.

9. Ringförmiger Körper (1, 1') mit einer Winkelskalierung (2) gemäß einem der vorhergehenden Ansprüche, **dadurch gekennzeichnet, dass** die Ausnehmung (3) zur formschlüssigen drehfesten Befestigung an dem Maschinenteil (8) des Körpers (1, 1') als eine Passfedernut ausgestaltet ist.

10. Verwendung eines ringförmiger Körper (1, 1') mit einer Winkelskalierung (2) gemäß einem der Ansprüche 1 bis 9 an einer schnell laufenden Welle (8) einer Werkzeugmaschine zur Messung der Drehstellung der Welle (8).

11. Verwendung eines ringförmiger Körper (1, 1') mit einer Winkelskalierung (2) gemäß dem Anspruch 10, wobei an die Welle (8) ein spanabhebendes Werkzeug koppelbar ist.

## Claims

1. Annular body (1, 1') with an angular scale (2) for measuring the rotational position of a machine part (8) about an axis (Z), the body (1, 1') having radial recesses (3, 4, 4') and projections (5, 6) on its inner circumference, and at least one of the recesses (3) being suitable for form-fitting rotatably fixed fastening on the machine part (8), **characterized in that** the sum of the central angles (εᵢ, ε_{I}'), which are respectively defined by starting and end points (Sε_{I}, Eεᵢ, Sε_{I}', Eεᵢ') of the projections (5, 6), is smaller than the sum of the central angles (α_{I}, αᵢ') which are respectively defined by starting and end points (Sα_{I}, Eαᵢ, Sαᵢ', Eαᵢ') of the recesses (3, 4, 4'), the starting and end points (Sε_{I}, Eεᵢ, Sεᵢ', Eεᵢ', Sαᵢ, Eα_{I}, Sαᵢ', Eαᵢ') simultaneously being those points at which there is, as provided, a transition between the machine part (8) bearing and not bearing against the body (1, 1').

2. Annular body (1, 1') with an angular scale (2) according to Claim 1, **characterized in that** the sum of the central angles (αᵢ, α_{I}'), which are respectively defined by starting and end points (Sαᵢ, Eαᵢ, Sαᵢ', Eαᵢ') of the recesses (3, 4, 4'), is greater than 240°, in particular greater than 300°.

3. Annular body (1, 1') with an angular scale (2) according to Claim 1 or 2, **characterized in that** the at least one recess (3) for form-fitting rotatably fixed fastening on the machine part (8) has a geometry with a smallest contour radius Ry and a further recess (4, 4') has a smallest contour radius Rx, there being the condition Ry < Rx.

4. Annular body (1, 1') with an angular scale (2) according to one of the preceding claims, **characterized in that** the smallest distance (Df) between the bottom of the recess (3) for form-fitting rotatably fixed fastening on the machine part (8) of the body (1, 1') and the axis (Z) is less than or equal to the smallest distance (Rn) between the bottom of a further recess (4, 4') and the axis (Z).

5. Annular body (1, 1') with an angular scale (2) according to one of the preceding claims, **characterized in that** the ratio of the outer radius (Ra) of the body (1, 1') to the inner radius (Ri) thereof is less than 2.25, in particular less than 1.75.

6. Annular body (1, 1') with an angular scale (2) according to one of the preceding claims, **characterized in that** the angular scale (2) is arranged on the lateral side of the body (1, 1').

7. Annular body (1, 1') with an angular scale (2) according to one of the preceding claims, **characterized in that** the angular scale (2) is fastened as a separate ring on the annular body (1, 1').

8. Annular body (1, 1') with an angular scale (2) according to one of the preceding claims, **characterized in that** the angular scale (2) is composed of magnetic regions.

9. Annular body (1, 1') with an angular scale (2) according to one of the preceding claims, **characterized in that** the recess (3) for form-fitting rotatably fixed fastening on the machine part (8) of the body (1, 1') is designed as a feather key groove.

10. Use of an annular body (1, 1') with an annular scale (2) according to one of Claims 1 to 9 on a highspeed shaft (8) of a machine tool to measure the rotational position of the shaft (8).

11. Use of an annular body (1, 1') with an angular scale (2) according to Claim 10, in which a cutting tool can be coupled to the shaft (8).

## Revendications

1. Corps annulaire (1, 1') doté d'une échelle angulaire (2) et destiné à mesurer la position de rotation d'une partie (8) d'une machine autour d'un axe (Z),
le corps (1, 1') présentant à sa périphérie intérieure des découpes radiales (3, 4, 4') et des saillies radiales (5, 6),
au moins l'une des découpes (3) convenant pour être fixée en correspondance géométrique et à rotation solidaire sur la partie (8) de la machine,
**caractérisé en ce que**
la somme des angles au centre (εᵢ, εᵢ',) qui sont chacun définis par le point initial et le point final (Sεᵢ, Eεᵢ, Sεᵢ', Eεᵢ') des saillies (5, 6) est plus petite que la somme des angles au centre (αᵢ, αᵢ') qui sont chacun définis par les points initiaux et les points finaux (Sαᵢ, Eαᵢ, Sαᵢ', Eαᵢ') des découpes (3, 4, 4'), les points initiaux et les points finaux (Sεᵢ, Eεᵢ, Sεᵢ', Eεᵢ'; Sαᵢ, Eαᵢ, Sαᵢ', Eαᵢ') étant en même temps les points sur lesquels une transition entre l'application et la non application de la partie (8) de la machine sur le corps (1, 1') a lieu correctement.

2. Corps annulaire (1, 1') doté d'une échelle angulaire (2) selon la revendication 1, **caractérisé en ce que** la somme des angles au centre (αᵢ, αᵢ') qui sont chacun définis par des points initiaux et des points finaux (Sαᵢ, Eαᵢ, Sαᵢ', Eαᵢ') des découpes (3, 4, 4') est plus grande que 240° et en particulier plus grande que 300°.

3. Corps annulaire (1, 1') doté d'une échelle angulaire (2) selon les revendications 1 ou 2, **caractérisé en ce que** la ou les découpes (3) destinées à être fixées en correspondance géométrique et à rotation solidaire sur la partie (8) de la machine présentent une géométrie dans laquelle le plus petit rayon du contour est Ry et une autre découpe (4, 4') une géométrie dans laquelle le plus petit rayon du contour est Rx, avec la condition Ry < Rx.

4. Corps annulaire (1, 1') doté d'une échelle angulaire (2) selon l'une des revendications précédentes, **caractérisé en ce que** la plus petite distance (Df) entre le fond de la découpe (3) destinée à être fixée en correspondance géométrique et à rotation solidaire sur la partie (8) de la machine du corps (1, 1') et l'axe (Z) est inférieure ou égale à la plus petite distance (Rn) entre le fond d'une autre découpe (4, 4') et l'axe (Z).

5. Corps annulaire (1, 1') doté d'une échelle angulaire (2) selon l'une des revendications précédentes, **caractérisé en ce que** le rapport entre le rayon extérieur (Ra) du corps (1, 1') et son rayon intérieur (Ri) est inférieur à 2,25 et en particulier inférieur à 1,75.

6. Corps annulaire (1, 1') doté d'une échelle angulaire (2) selon l'une des revendications précédentes, **caractérisé en ce que** l'échelle angulaire (2) est disposée sur le côté d'enveloppe du corps (1, 1').

7. Corps annulaire (1, 1') doté d'une échelle angulaire (2) selon l'une des revendications précédentes, **caractérisé en ce que** l'échelle angulaire (2) est fixée en tant qu'anneau séparé sur le corps annulaire (1, 1').

8. Corps annulaire (1, 1') doté d'une échelle angulaire (2) selon l'une des revendications précédentes, **caractérisé en ce que** l'échelle angulaire (2) est constituée de zones magnétiques.

9. Corps annulaire (1, 1') doté d'une échelle angulaire (2) selon l'une des revendications précédentes, **caractérisé en ce que** la découpe (3) destinée à assurer la fixation en correspondance géométrique et à rotation solidaire sur la partie (8) de la machine du corps (1, 1') est configurée comme rainure pour ressort d'adaptation.

10. Utilisation d'un corps annulaire (1, 1') doté d'une échelle angulaire (2) selon l'une des revendications 1 à 9 sur un arbre (8) tournant rapidement d'une machine-outil en vue de mesurer la position de rotation de l'arbre (8).

11. Utilisation d'un corps annulaire (1, 1') doté d'une échelle angulaire (2) selon la revendication 10, dans laquelle un outil d'enlèvement de matière peut être accouplé à l'arbre (8).
